# EUROPEAN PATENT SPECIFICATION

(11) **EP 0 544 724 B1**
(45) Date of publication and mention of the grant of the patent: **28.12.1994**
(21) Application number: 91914595.3
(22) Date of filing: 19.08.1991
(51) Int. Cl.: G01G 11/00, G01G 11/08

(54) **GRAVIMETRIC METERING APPARATUS FOR BULK MATERIALS**
GRAVIMETRISCHES DOSIERGERÄT FÜR SCHÜTTGÜTER
APPAREIL DE DOSAGE GRAVIMETRIQUE POUR PRODUITS EN VRAC

(30) Priority: 21.08.1990 US 570557
(43) Date of publication of application: 09.06.1993
(73) Proprietor: OHLMANN, Hans-Armin, Ayr, Ontario N0B 1E0 (CA)
(72) Inventor: OHLMANN, Hans-Armin, Ayr, Ontario N0B 1E0 (CA)
(74) Representative: Beetz & Partner Patentanwälte
(86) International application number: PCT/CA91/00286
(87) International publication number: WO 92/03707

(56) References cited:
- EP-A- 0 143 762
- EP-A- 0 198 956
- GB-A- 2 056 697
- GB-A- 2 127 566
- US-A- 3 800 894
- Patent Abstracts of Japan, vol. 6, no. 84 (P-117)(962), 22 May 1982 & JP-A-5722517

## Description

### TECHNICAL FIELD

This invention relates to a dosing or metering apparatus which supplies bulk materials to, for instance, a blender, in a controlled manner, either in portions or continuously. The bulk materials to be handled can be free-flowing or non-free-flowing like pellets, granulates, powders, regrinds, flakes, flours, farinas, etc. This kind of dosing apparatus can be part of a so-called blending station, where more than one component (ingredient) is to be mixed into a specified blend. But it can also be used as a single supplying/monitoring unit wherever the controlled flow of a bulk material is required. Major fields of application are the plastics processing industry, e.g. extrusion and injection molding plants, feed mills and food processing plants, chemical and pharmaceutical industries, rubber, ceramics, etc..

### BACKGROUND ART

Well established in the plastics processing industry are, for example, blending stations consisting of a central mixing hopper with up to six dosing units sitting on top of it. Such a station is able to produce blends out of up to six components, according to defined formulas. The working principle of these dosing units (also called metering units) is strictly volumetric. The metering elements of these units can be, for instance, rotating disks with holes, star feeders, or augers. The monitoring of the rotation of these elements is achieved either by counting the revolutions or fractions of them, or by time control. The amount of bulk material metered in a given period of time is the product of volume unit per increment, e.g. disk holes multiplied by the number of increments. While this dosing method is quite simple, it is not very reliable and there is no assurance of accuracy. One can never be certain that the metering elements, e.g. holes in the metering disks, are uniformly filled or even if there is any material in them to begin with. Furthermore, quite a number of bulk materials do not lend themselves to this dosing procedure, due to certain physical properties. Since no confirmation is being generated, there is no reliable verification that all the components of a blend are being metered properly and therefore present at the required ratio.

Of course, there has always been the possibility of using gravimetric methods in order to circumvent the above mentioned shortfalls. Working in the so-called lost weight mode, one can make use of various kinds of weigh scales such as weighing hoppers on load cells. All of these scales are expensive, bulky and often their accuracy does not suffice. Furthermore, none of these weighing systems lend themselves to the construction of a gravimetric dosing apparatus, which could replace certain volumetric dosing units.

### DISCLOSURE OF INVENTION

It is the object of this invention to provide a gravimetrically working apparatus for bulk materials -- free-flowing and non free-flowing -- able to operate both continuously and intermittently. The invention makes use of load cells, particularly "thin beam" strain gauges. Other active elements of the apparatus according to the invention are: a horizontally rotating flexible disk, supported by the circular bottom of a cylindrical housing; a sectorial portion of said bottom resting on a load cell; said sectorial portion being separated from the remainder of said circular bottom so it can vertically yield under the load; and preferably a flexible membrane acting as a sealing disk, preventing bulk material from reaching said circular bottom and ultimately trickling through the gaps between said circular bottom and said sectorial portion. This arrangement, combined with the flexibility of the rotary disk and sealing disk, allows for transmitting vertical forces exerted by the weight of a layer of bulk material on said flexible disk via said sectorial portion onto said load cell, which in turn provides proportional analog outputs. The housing of said apparatus according to the invention can be divided horizontally into two parts: the lower metering part and the upper material supply part. Both parts can have varying features in order to accommodate a variety of bulk materials with distinctively different physical properties, e.g. free-flowing and non free-flowing. In order to easily unite the lower metering part and the upper material supply part, their contiguous sides are cylindrical and are furbished with a flange and a clamping ring to connect them.

Further features of the invention will be described or will become apparent in the course of the following detailed description.

### BRIEF DESCRIPTION OF DRAWINGS

In order that the invention may be more clearly understood, the preferred embodiment thereof will now be described in detail by way of example, with reference to the accompanying drawings, in which:
Figure 1 shows an elevated section (C-C in Figure 2) of the lower part or metering section;
Figure 2 shows a top view (A-A in Figure 6) of the lower part or metering module;
Figure 3 is an elevated section (D-D in Figure 2) of the lower part or metering module;
Figure 4 is an elevated section (C-C in Figure 5) of the lower part or metering module, identical to Figure 1 but with the sealing disk installed;
Figure 5 shows a top view of the lower or metering module, identical to Figure 2 but with the sealing disk installed;
Figure 6 shows an elevated section (F-F in Figure 7) of both the lower part or metering module, and the upper part or material supply module;
Figure 7 is a top view (B-B in Figure 6) of the lower part or metering module, demonstrating the material flow on the rotating disk;
Figure 8 is an elevated section (E-E in Figure 7) of both the lower and the upper part, with the latter showing the material supply module for free-flowing bulk materials;
Figure 9 shows an elevated section (H-H in Figure 10) of both the lower part and the upper part, the latter showing the material supply module for non-free-flowing bulk materials;
Figure 10 shows a top view (G-G in Figure 9) of the upper part or material supply module for non-free-flowing bulk materials, shown empty, i.e. without bulk materials;
Figure 11 is the top view of the membrane or sealing disk;
Figure 12 is an elevated section (A-A in Figure 11) of the sealing disk with radial ribs;
Figure 13 is an elevated section (B-B in Figure 11) of the sealing disk with circumferential lip;
Figure 14 is a magnified sectional view of the configuration of the groove/bulge, circumferential lip of the sealing disk, and retention ring;
Figure 15 is a view from underneath of the rotary disk with its spiral ribs;
Figure 16 is a section (A-A in Figure 15) of the rotary disk with spiral rib;
Figure 17 is a radial section (B-B in Figure 15) of the rotary disk;
Figure 18 is the elevated section (A-A in Figure 19) of both the upper and the lower part, the latter showing a modification of the metering module; and
Figure 19 is a top view (B-B in Figure 18) of the lower part, showing a modification of the metering module with both flexible disks removed.

### BEST MODE FOR CARRYING OUT THE INVENTION

Although this invention's applications are not restricted only to that end, the preferred embodiment of the invention is aimed at easily replacing existing volumetric dosing units, particularly those operating with metering disks. Thus, it is logical to start this description with a brief look at these volumetric dosing units, their typical applications, and their functions.

Driven by a gear motor, a metering disk in a housing slowly rotates horizontally beneath the bulk material in a surge bin. Its metering chambers are supposed to fill up with said material, which is to drop out each time a metering chamber crosses the one discharge hole in the housing's bottom. Installed within the surge bin, right above the discharge hole, is a baffle which prevents the passage of more material than accommodated in each metering chamber.

The configuration of a complete blender station for example consists of two dosing units with their surge bins, housings and gear motors, and furthermore a control cabinet. In practice, the outlet flange of a mix hopper can, for example, be connected to the throat of an injection molding machine. In this example, the machine is forming plastic parts using a blend of two plastic raw materials, which are continuously mixed and supplied by the blender station. Of course, more than two dosing units could be sitting on one mix hopper. The various materials are metered simultaneously into the mix hopper at specified ratios. The ratios are determined by the number of holes in the metering disks and their dimensions. As the drive shaft and the metering disk rotate together, they pass a stationary counting sensor which is electronically connected to the control cabinet. One hole of the metering disk equals one counting impulse to the control cabinet. Of course, within the mix hopper is a mixing arm, driven by the gear motor.

According to the principle of the present invention, at the core of a gravimetrical dosing unit is a "thin beam" strain gauge. This load cell converts certain deformations of its shape, called "double bend", into corresponding output signals of direct voltage. The properly conditioned load cell signal is proportional to the mass acting on the weighing platform. Monitoring the disk rotation yields a similar signal proportional to the disk speed. Arithmetically combined, these two signals yield a gravimetrically correct mass flow record. This record is continuously compared to preset values determined by the blend formula. As soon as preset ratios have been reached, output signals are generated. These output signals represent the actual basis for a metering procedure. They make it possible to start and stop mixing cycles, or to monitor continuously operating bulk material supply systems. In the further description of the invention, references will be made to the aforementioned drawings.

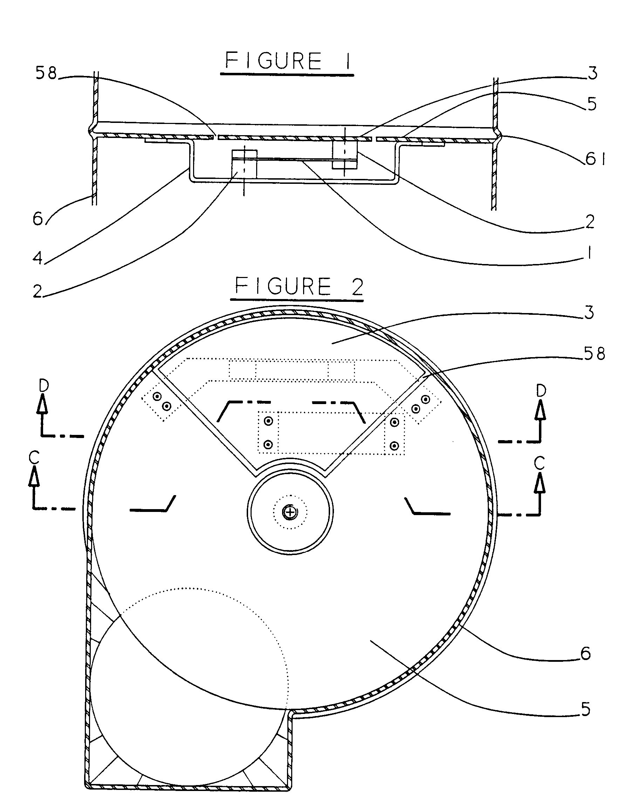

As mentioned before, at the core of the invention is a thin beam strain gauge. Figure 1, an elevated section, and Figure 2, a top view, show a configuration typical of the invention. Using two mounting blocks 2, a thin beam strain gauge 1 is bolted to a weighing platform 3 on its one end and to a support bracket 4 on its other end. The weighing platform is aligned with and constitutes one sector of the circular bottom 5, which is fixed to a cylindrical housing 6. Any vertical force exerted onto the platform 3 will deform the thin beam strain gauge 1 in the desired double bend manner. The load cell 1 in turn will provide a direct voltage output signal proportional to the deformation. It is this direct voltage output signal that will be used for the intended purpose of the gravimetric flow control of bulk materials.

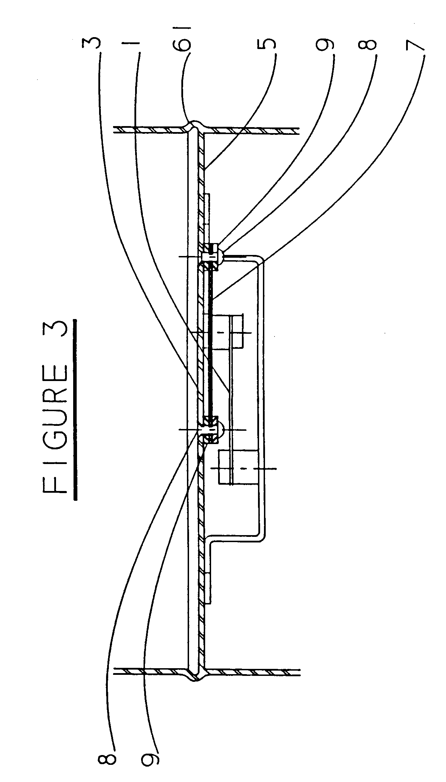

Figure 3 shows basically the same configuration as Figure 1, except for an added feature, the brace plate 7 made of thin spring steel. The plate is meant to hold the weighing platform 3 in place, while allowing vertical loads to reach the load cell 1 nearly unrestricted. The brace plate 7 is fastened by means of rivets 8 and washers 9 to the circular bottom 5 on one end and to the weighing platform 3 on the other end. In Figure 2, the weighing platform 3 is depicted in the shape of a sector with a center angle of 90 degrees, however, it could have other forms as well.

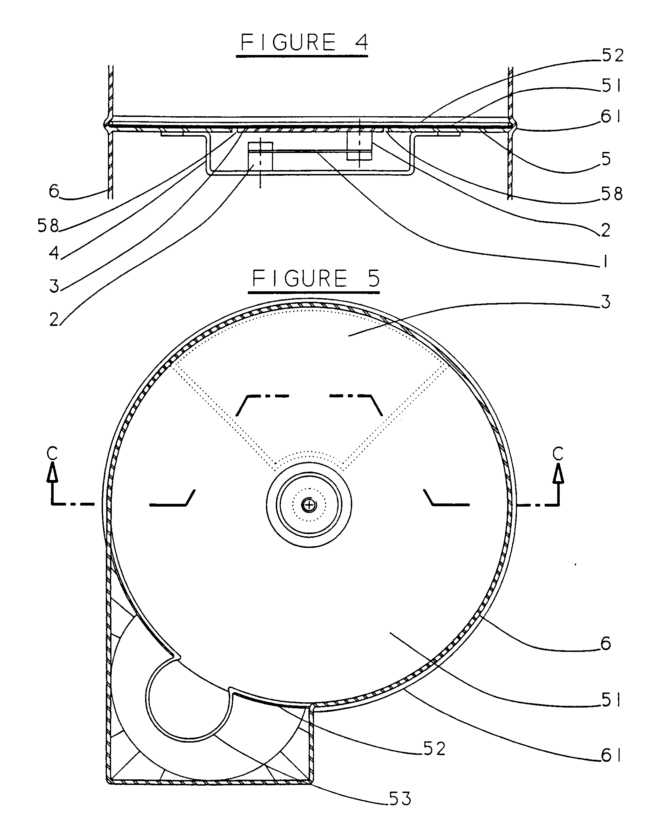

Figures 4 and 5 are basically identical to Figures 1 and 2 but demonstrate the accommodation of the membrane or sealing disk. This sealing disk 51 rests directly on the circular bottom 5 and the sectorial platform 3, and is held in place by a circular spring 52. To enforce its radial force, the circular tension spring 52 has an attached loop 53. Their dimensions are such that their spring tension exerts a radial force onto the cylindrical inside wall of the bulge 61. This bulge 61 forms a groove on the inner side of the housing where the tension ring 52 and the circumferential lip 54 of the sealing disk 51 fit it.

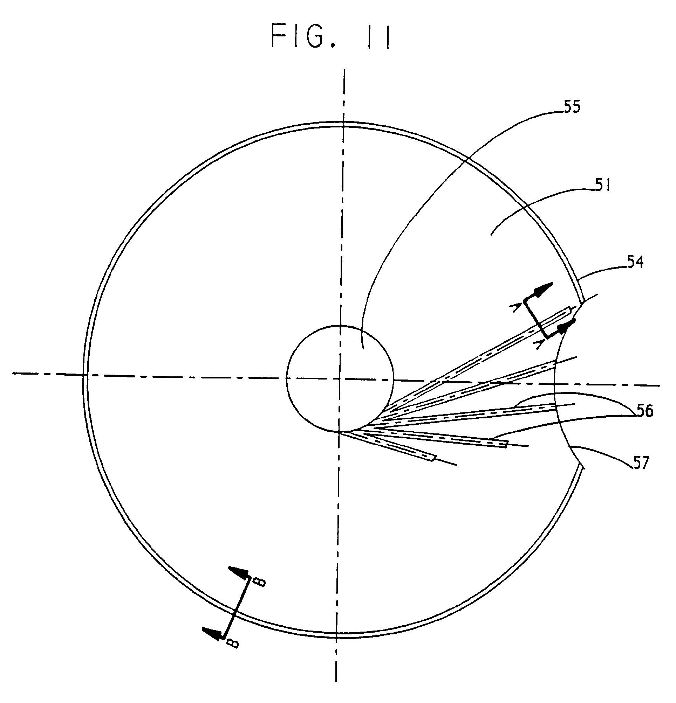

Figure 11 shows an embodiment of the sealing disk 51. It has a flat, circular shape with a thin membrane radially reaching from a circumferential lip 54 to a centre hole 55. A few ribs 56 - in this embodiment five ribs - together with the circular cutout 57 and in conjunction with spiral ribs on the rotary disk assist in preventing material to be metered from intruding horizontally into the space between the sealing disk 51 and the rotary disk which will be described later.

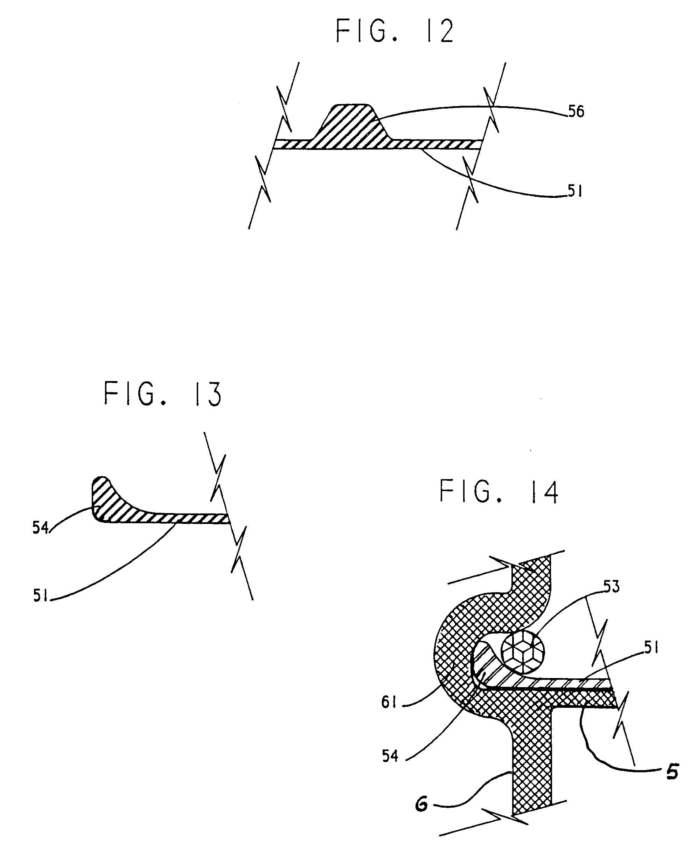

Figure 12 shows an enlarged cross section (A-A in Figure 11) through one of the ribs 56.

Figure 13 shows a cross section (B-B in Figure 11) of the circumferential lip 54.

Figure 14 shows an enlarged section of a configuration of the sealing disk 51, its circumferential lip 54, the tension ring 53 and the groove/bulge 61. So with the sealing disk 51 in place, the bottom 5 of the housing 6 is sealed and no bulk material could ultimately seep through the inevitable gaps 58 between bottom 5 and sectorial platform 3. Thus the sealing disk 51 permits the handling of higher layers of bulk material and consequently raises the capacity of the metering apparatus.

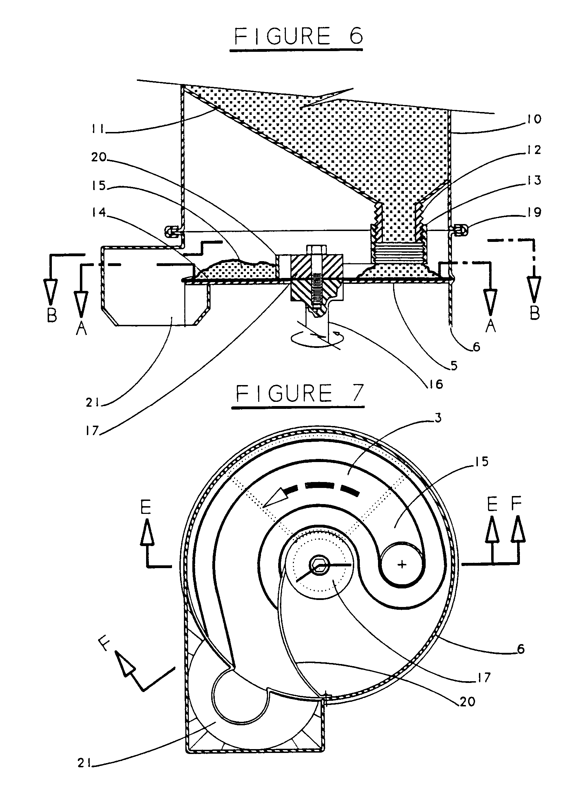

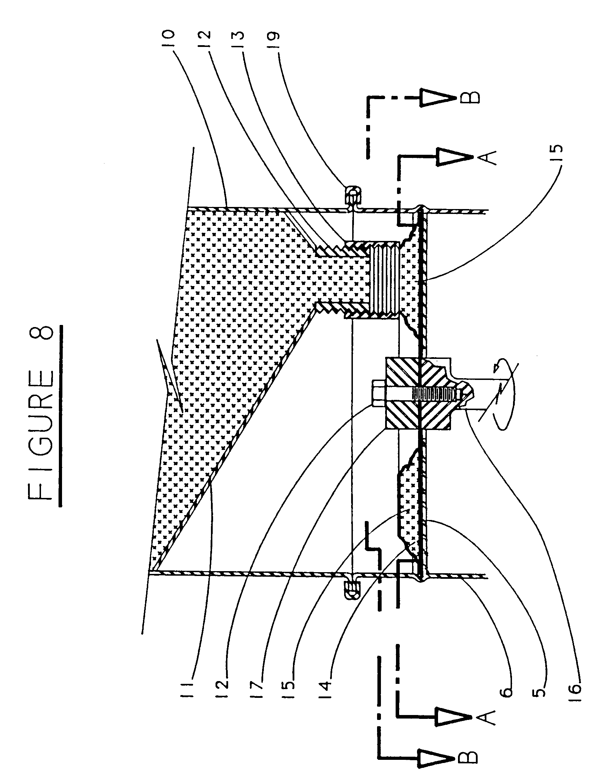

Figure 6 is an elevated section (F-F in Figure 7) and shows both the lower part, or metering module, and the upper part, or material supply module of the apparatus, according to the invention. Also shown are the section lines A-A and B-B, determining the top views in Figures 2 and 5 respectively.

Above the section line B-B, the upper part, or material supply module e.g. for free-flowing bulk materials, is shown, consisting basically of the cylindrical housing 10 with a built-in tapered bottom 11. This tapered bottom leads to a preferably circular outlet spout 12, which partially reaches below the parting line B-B. The outlet spout 12 is threaded on its outer surface and bears an extension ring 13. This ring in turn is threaded on its inner surface. Since both threads match, the distance between the lower rim of the extension ring 13 and the surface of the flexible disk 14 is adjustable. The ability to adjust this distance facilitates variations on the height of the bulk material's layer, shown with its cross section 15 to be resting on the top of the flexible disk 14. The tapered shape of cross section 15 is determined by the diameter of extension ring 13 and the sloped angle of the bulk material.

Figure 6 shows the following parts of the lower part, or metering module, of the apparatus: the flexible disk 14 supported by the circular bottom 5, which in turn is fixed to the circular housing 6. The circular bottom 5 has a center hole, through which a drive shaft 16 protrudes. By means of a bushing 17 and a bolt 18, the flexible disk 14 is squeezed to the flange of drive shaft 16. The drive shaft 16 is powered by a gear motor (not shown). While the flexible disk is rotating slowly past the lower rim of the extension ring 13, the layer 15 of the bulk material is being formed. In the example as shown in Figures 6 and 7, the two parts of the apparatus have a flange on each of the contiguous ends of their cylindrical housings 6 and 10, and are connected by a clamping ring 19.

Figure 7 is a top view (B-B in Figure 6) and shows additional details of the lower part, or metering module, and allows for further explanations of the functions of the lower part. While the flexible disk is slowly rotating counter clockwise, the ring of bulk material 15 starts to build up right below the outlet spout 12, and moves towards the weighing platform 3. As a portion of the bulk material's layer passes over platform 3 and rests on it for a given time interval, it exerts a vertical force through the flexible disks 14 and 51 onto the weighing platform 3, causing deformation of the thin beam strain gauge. It is this deformation that produces the alteration of the load cell's direct voltage output, which is permanently monitored by means of electronic control. These direct voltage outputs, called "weight readings" for the purpose of this explanation, can be taken at various time intervals, e.g. one revolution of the flexible disk, one second, or a fraction or multiple thereof. The time interval would depend on the accuracy required, the type of bulk material being processed, the through-put capacity of the apparatus, and other circumstances. The said weight readings, arithmetically combined with other operating factors, like number of readings, number of flexible disk revolutions, are processed in the electronic control of a metering system, providing for corresponding electronic signals in correct proportion to the mass flow of the bulk materials.

In order to establish the real mass of a given quantity of bulk material, one has to obtain the ratio between the quantity's real mass and the aforesaid, correctly proportioned signals. This ratio has to be ascertained for each type of bulk material by conducting a calibrating procedure. Basically, the calibrating procedure entails a comparison of the aforesaid proportional signals, totalled over a given time, with the amount of real mass gathered over that same period of time. The amount of real mass must, of course, be determined with an accurate weigh scale. The ratio or factor obtained in this manner is characteristic of a specific bulk material, and can be entered into the electronic control, enabling the latter to calculate and display the real weight data.

After having passed the weighing platform 3 and continuing further on the slowly rotating, flexible disk 14, the material layer 15 finally arrives at the discharge location. At this location a curved scraper 20 is fastened to the housing 6 on one end and touching the hub 17 with the other end. The scraper 20 forces the bulk material's layer 15 off the flexible disk 14 and into the discharge chute 21, which is a lateral addition to the cylindrical housing 6. The scraper 20 either touches down firmly with its lower edge on the flexible disk, or it may float on the rotating disk. In the latter case the scraper's outer end is only loosely attached to the housing, e.g. by means of two studs fixed to the housing and vertical slots in the scraper's outer end. The scraper's inner end finds horizontal support in leaning against the hub 17, while the friction between the slowly rotating disk and the lower edge of the scraper provides the necessary force for pushing and holding the "floating" scraper in its place. The next step the bulk material takes on its passage is, of course, through the discharge chute 21 into the mixing hopper of a blender, according to the example of this embodiment. It goes without saying that this metering apparatus can work either in stop-and-go mode or continuously, depending on the circumstances of a particular application.

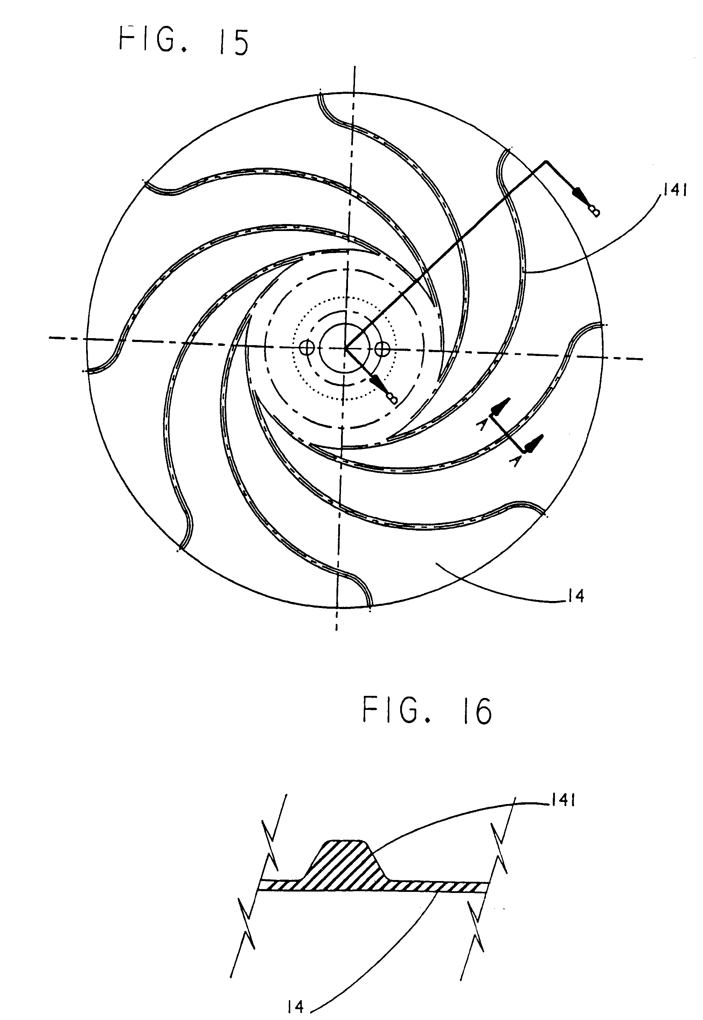

Figure 15 provides a view of the rotary disk's 14 underside which bears a number of spirally formed ribs 141. These ribs are to transport particles which may have immigrated into the space between the sealing disk 51 and the rotary disk 14 towards the circumference. They achieve this in conjunction with the ribs 56 and the cut out 57 on the sealing disk 51.

Figure 16 shows a magnified section of a rib 141 on the rotary disk 14.

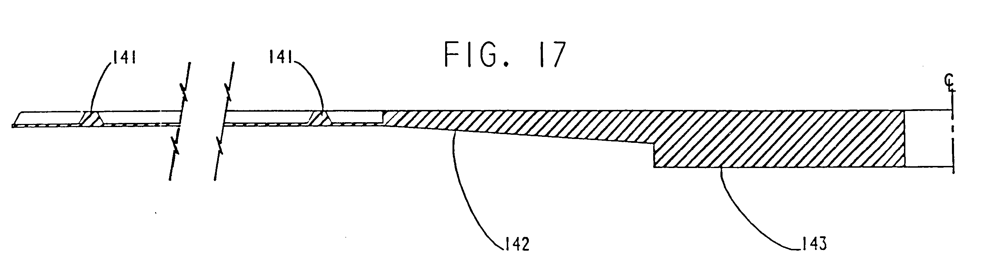

Figure 17 shows a radial section of a preferred embodiment of the rotary disk 14, showing two ribs 141, a tapered section 142 and part of the hub 143. This particular shape contributes towards necessary properties in the rotary disk 14, e.g. vertical flexibility and horizontal rigidity. For the sake of elastic flexibility, the flexible disks, rotary disk 14 and sealing disk 51 are preferably made of man-made rubber, certain thermoplastic materials or a combination thereof.

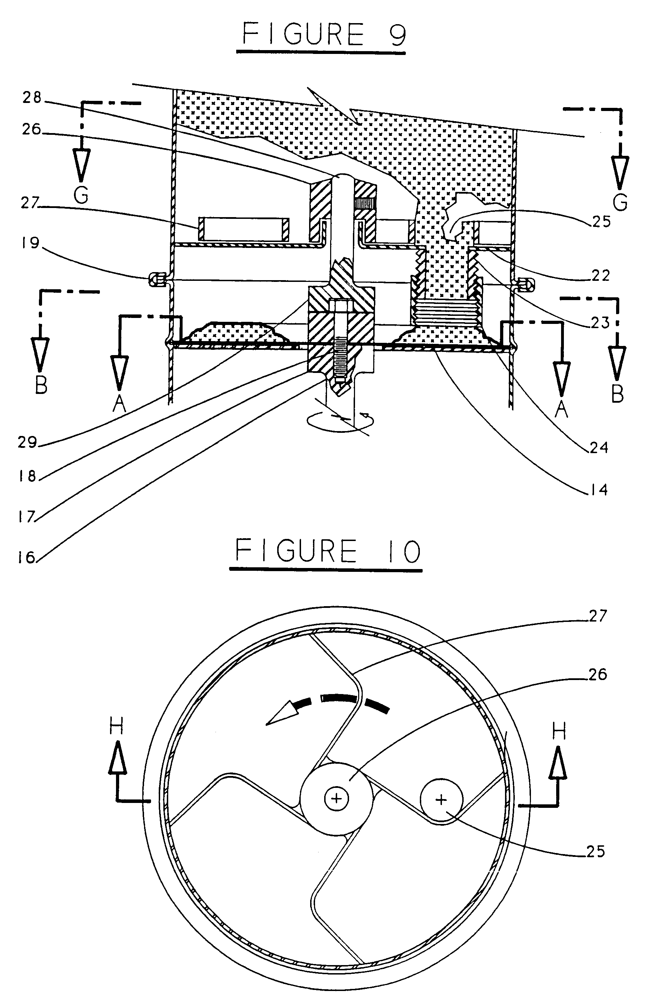

Finally, Figure 9 shows the elevated section (H-H in Figure 10) of the entire apparatus, depicting another version of the upper part, or material supply module. This version, as well as top view G, pertain to non free-flowing bulk materials. The lower part, or metering module, remains the same. The significant difference lies in the design of the upper parts, or material supply modules. Instead of a tapered bottom 11 for free-flowing bulk materials, the second version shows a flat, circular bottom 22. Being flat, the circular bottom 22 prevents non free-flowing bulk materials from becoming compressed in the course of their stay in the surge bin, since these materials do not tolerate such compression. The flat, circular bottom 22 has a discharging spout 23 attached to it. The discharging spout 23 and the threaded extension ring 24 are identical in features and functions to the corresponding items 12 and 13 in the version for free-flowing materials, according to Figure 6.

In order to transport the bulk material to the outlet opening 25 in the circular bottom 22, this example shows a scraper wheel consisting of a hub 26 and four arched scraper arms 27. The arched shape of the scraper arms and the counter clockwise rotation transport the bulk material resting on the circular bottom 22 toward the outlet hole 25, thus feeding the slowly rotating, flexible disk 14 underneath. The scraper wheel sits on a drive shaft 28, which in turn is rotated by the drive shaft 16 of the lower part, or metering module. To this end, the upper drive shaft 28 is furbished with a flange 29 at its lower end. The flange 29 has a hexagonal center hole, corresponding with the hexagonal head of the bolt 18, establishing the mechanical link in this example. This configuration allows for easy separation of both parts of the apparatus, after the clamping ring 19 has been removed first. The upper part, or material supply module, can simply be lifted off the lower part, or metering module.

The fact that the various versions of the upper part can easily be combined with the lower part of the apparatus contributes greatly to the envisioned flexibility of this proposed gravimetric metering system for bulk materials. By the same token, another version of the lower part, or metering module might become interesting. Especially when it comes to the handling of abrasive materials for instance, the friction between scraper 20 and rotary disk 14 should be eliminated.

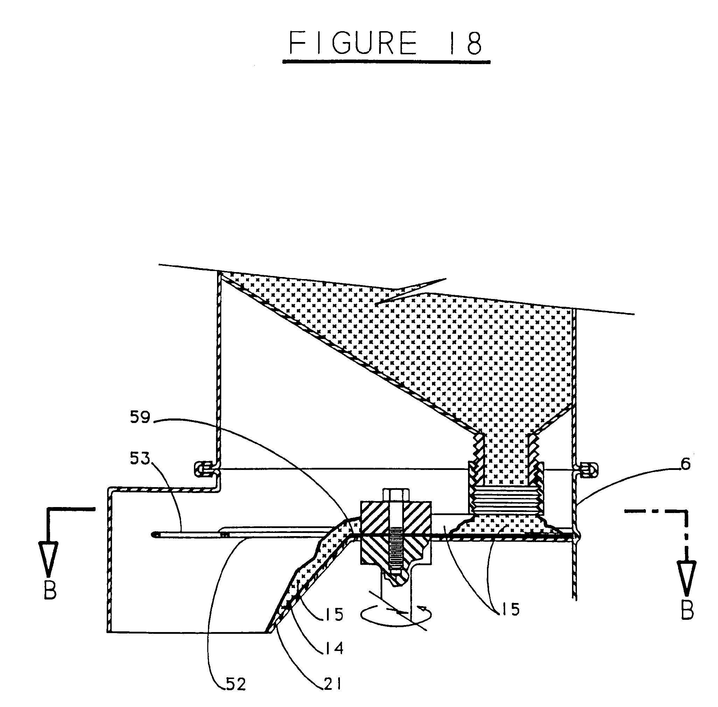

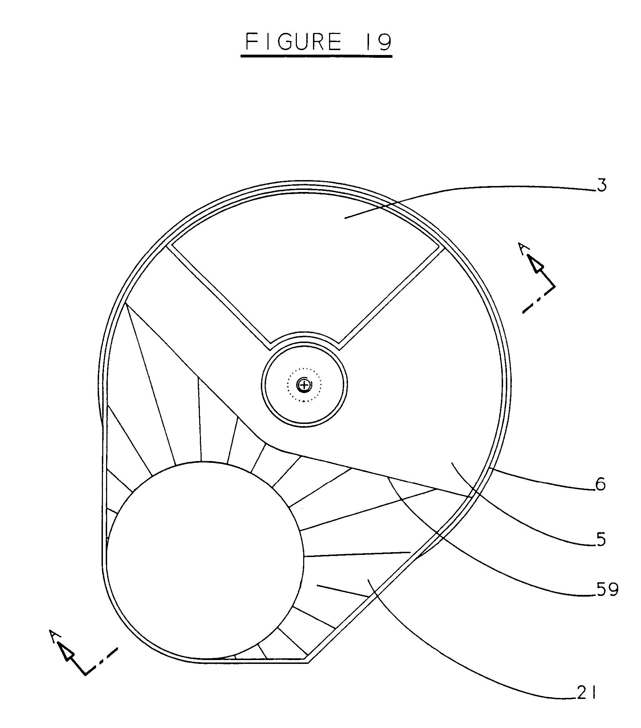

Figures 18 and 19 show the embodiment of a scraperless version of the metering module.

Figure 18 is the elevated section (A-A in Figure 19) of both the upper part or material supply module, version for free flowing materials, and the lower part or metering module, scraperless version.

Figure 19 is the top view (B-B in Figure 18) of the lower part or metering module, scraperless version, with both the flexible rotary disk 14 and the flexible sealing disk 51 removed, revealing the view onto the bottom 5 and platform 3 in the housing 6. The circular bottom 5 is reduced to almost a semi circle only, limited by the edge 59. This feature allows the flexible rotating disk 14 to flop down into the chute 21 and dispose of the layer 15 of bulk materials, as shown in Figure 18.

Compared to metering systems operating on volumetric principles in general, or even other gravimetric weighing systems such as lost weight systems specifically, this proposed apparatus will yield substantial advantages: simple, low cost design; low installation heights; metering of difficult materials even to the extent that they could not be automatically handled to date.

It will be appreciated that the above description relates to the preferred embodiment by way of example only. Many variations will be obvious to those knowledgeable in the field.

### INDUSTRIAL APPLICABILITY

The invention is useful for dosing or metering of bulk materials, either in portions or continuously.

## Claims

1. Gravimetric metering apparatus for metering the flow of bulk materials, comprising a vertically-compliant horizontal platform (3) supported above a load sensor (1) in an operative relationship therewith for the detection of weight on said platform, characterized by:
thin, flexible means (14) moveable rotatably from a dispensing location, thence across the upper surface of said platform, and thence to a discharge location (21);
dispensing means (12) for dispensing said material onto said thin flexible means at said dispensing location;
means (20) for removing material from said thin, flexible means at said discharge location; and
data logging and processing means connected to said load sensor for logging and processing signals periodically from said load sensor, whereby with appropriate calibration a total mass passing across said load sensor may be measured, whereby metering may be effected.

2. Gravimetric metering apparatus as recited in claim 1, further characterized by a cylindrical housing (6), having a horizontal bottom (5) with an aperture in one sector thereof, in which said vertically compliant horizontal platform is disposed in said aperture, and in which said thin flexible means is a flexible horizontal disk (14) above and extending across said bottom, rotatable about the vertical axis of said cylindrical housing, said apparatus further including motor means for rotating said rotatable disk in the direction from said dispensing location towards said discharge location past the location of said load sensor.

3. Gravimetric metering apparatus as recited in claim 2, further characterized by said dispensing means having a hopper (11) positioned at least partially within said cylindrical housing and having a dispensing chute (12) for dispensing said material onto the upper surface of said rotatable disk at said dispensing location as said rotatable disk rotates.

4. Gravimetric metering apparatus as recited in claim 2, further characterized by said means for removing material from said rotatable disk including a vertically oriented scraper (20) mounted within said housing and extending downwardly to near the upper surface of said rotatable disk adjacent said discharge location.

5. Gravimetric metering apparatus as recited in claim 4, further characterized by said scraper (20) being supported in a vertically compliant fashion such that it is permitted to float against the upper surface of said rotatable disk.

6. Gravimetric metering apparatus as recited in claim 2, further characterized by said load sensor (1) being of the type comprising a thin beam, one end of said thin beam being mounted in a fixed location with respect to said housing, and the other end being fixed to said vertically compliant horizontal platform.

7. Gravimetric metering apparatus as recited in claim 2, further characterized by said rotatable disk (14) having a plurality of spiral ribs (141) on the underside thereof, adapted to subtly urge said bulk material on the upper surface of said rotatable disk generally towards the circumference thereof as the disk rotates.

8. Gravimetric metering apparatus as recited in claim 2, further characterized by a flexible sealing disk (51) interposed between said horizontal bottom (5) and said rotatable disk (14), and sealed against said cylindrical housing by virtue of a retaining ring (52) which secures the periphery of said sealing disk in a groove (61) in the wall of said cylindrical housing.

9. Gravimetric metering apparatus as recited in claim 8, further characterized by said sealing disk having a plurality of ribs (56) on the upper surface thereof adjacent said discharge location, said ribs being oriented generally radially to assist in directing said bulk material towards said discharge location.

10. Gravimetric metering apparatus as recited in claim 2, further characterized by said housing bottom (5) having a large section thereof removed in the vicinity of said discharge location, thereby allowing said flexible rotatable disk (14) to flop down at that location to thereby dump its load at said discharge location.

## Patentansprüche

1. Gravimetrisches Dosiergerät zum Dosieren des Durchsatzes von Schüttmaterial mit einer senkrecht federnden horizontalen Plattform (3), die über einem Lastsensor (1) zum Erfassen des Gewichtes der Plattform in bezug auf diesen bewegbar abgestützt ist,
**gekennzeichnet durch**
- eine dünne flexible Vorrichtung (4), die von einer Ausgabestelle aus, von dort quer über die obere Fläche der Plattform und von dort zu einer Auslaßstelle (21) drehbar ist,
- eine Ausgabevorrichtung (12) zum Ausgeben des Materials an der Ausgabestelle auf die dünne flexible Vorrichtung (4),
- eine Vorrichtung (20) zum Entfernen von Material von der dünnen flexiblen Vorrichtung an der Ausgabestelle und
- eine Datenerfassungs- und Verarbeitungseinrichtung, die zum Erfassen und Verarbeiten von periodischen Signalen vom Lastsensor mit dem Lastsensor verbunden ist, wodurch mit einer geeigneten Eichung eine durch den Lastsensor hindurchgehende Gesamtmasse gemessen werden kann, und wodurch das Dosieren bewirkt werden kann.

2. Gravimetrisches Meßgerät gemäß Anspruch 1, weiterhin **gekennzeichnet durch**
ein zylindrisches Gehäuse (6) mit einem horizontalen Boden (5) mit einer Öffnung in einem Abschnitt, in dem die senkrechte federnde horizontale Plattform in der Öffnung angeordnet ist, und wobei die dünne flexible Vorrichtung eine flexible horizontale Scheibe (14) ist, die über dem Boden ist, sich quer über ihn erstreckt und um die senkrechte Achse des zylindrischen Gehäuses drehbar ist, wobei das Gerät weiterhin einen Motor zum Drehen der drehbaren Scheibe in der Richtung von der Ausgabestelle zur Auslaßstelle hinter der Stelle des Lastsensors umfaßt.

3. Gravimetrisches Meßgerät gemäß Anspruch 2, weiterhin **gekennzeichnet durch**
einen Trichter (11) der Ausgabevorrichtung, der mindestens teilweise im zylindrischen Gehäuse angeordnet ist, und einen Trichterauslauf (12) für die Ausgabe des Materials auf die Oberfläche der drehbaren Scheibe an der Ausgabestelle aufweist, wenn sich die drehbare Scheibe dreht.

4. Gravimetrisches Meßgerät gemäß Anspruch 2, weiterhin **gekennzeichnet durch**
die Vorrichtung zum Entfernen von Material von der drehbaren Scheibe mit einem senkrecht orientierten Schaber (20), der im Gehäuse angeordnet ist und sich nach unten nahe an die Oberfläche der drehbaren Scheibe in der Nähe der Auslaßstelle erstreckt.

5. Gravimetrisches Meßgerät gemäß Anspruch 4, weiterhin **gekennzeichnet durch**
den Schaber (20), der in einer senkrechten federnden Stellung derart abgestützt ist, daß er auf der Oberfläche der drehbaren Scheibe rutschen kann.

6. Gravimetrisches Meßgerät gemäß Anspruch 2, weiterhin **gekennzeichnet durch**
den Lastsensor (1), der derart angeordnet ist, daß er einen dünnen Stab aufweist, wobei ein Ende des dünnen Stabes hinsichtlich des Gehäuses ortsfest an einer Stelle montiert und das andere Ende an der senkrecht federnden horizontalen Plattform befestigt ist.

7. Gravimetrisches Meßgerät gemäß Anspruch 2, weiterhin **gekennzeichnet durch**
die drehbare Scheibe (14), die an ihrer Unterseite mehrere spiralförmige Rippen (141) aufweist, die so ausgelegt sind, daß sie das Schüttmaterial auf der Oberfläche der drehbaren Scheibe, auf sanfte Weise generell zum Umfang derselben hinbewegen, wenn sich die Scheibe dreht.

8. Gravimetrisches Meßgerät gemäß Anspruch 2, weiterhin **gekennzeichnet durch**
eine zwischen dem horizontalen Boden (5) und der drehbaren Scheibe (14) angeordnete und gegen das zylindrische Gehäuse durch einen Rückhaltering (52) abgedichtete flexible Dichtscheibe (51), der den Umfang der Dichtscheibe in einer Nut (61) in der Wand des zylindrischen Gehäuses sichert.

9. Gravimetrisches Meßgerät gemäß Anspruch 8, weiterhin **gekennzeichnet durch**
die Dichtscheibe, die auf der Oberfläche in der Nähe der Auslaßstelle mehre Rippen (56) aufweist, wobei die Rippen zur Unterstützung des Richtens des Schüttmaterials zur Auslaßstelle hin generell radial orientiert sind.

10. Gravimetrisches Meßgerät gemäß Anspruch 2, weiterhin **gekennzeichnet durch**
den Gehäuseboden (5), bei dem ein großer Teil in der Nähe der Auslaßstelle entfernt ist, wodurch sich die flexible drehbare Scheibe (14) an der Stelle nach unten ausbeult, so daß ihre Last an der Auslaßstelle abgelassen wird.

## Revendications

1. Appareil de dosage gravimétrique destiné à doser un courant de matière en vrac, comprenant une plate-forme horizontale (3) élastique verticalement, supportée au-dessus d'un capteur (1) de charge en position de travail par rapport à elle pour la détection du poids de la plate-forme, caractérisé par :
un mince dispositif flexible (14) mobile en rotation depuis un emplacement de distribution puis sur la surface supérieure de la plate-forme et à un emplacement d'évacuation (21),
un dispositif (12) de distribution de la matière sur le mince dispositif flexible à l'emplacement de distribution,
un dispositif (20) d'extraction de la matière du mince dispositif flexible à l'emplacement d'évacuation, et
un dispositif de relevé de données et de traitement connecté au capteur de charge et destiné à relever et traiter périodiquement les signaux du capteur de cherge, si bien que, avec un étalonnage convenable, une masse totale passant sur le capteur de charge peut être mesurée et qu'un dosage peut être réalisé.

2. Appareil de dosage gravimétrique selon la revendication 1, caractérisé en outre par un boîtier cylindrique (6) ayant un fond horizontal (5) qui a un orifice dans un secteur, dans lequel la plate-forme horizontale élastique verticalement est disposée dans l'orifice, et dans lequel le mince dispositif flexible est un disque horizontal flexible (14) placé au-dessus du fond et disposé transversalement à celui-ci et pouvant tourner autour de l'axe vertical du boîtier cylindrique, l'appareil comprenant en outre un dispositif à moteur destiné à faire tourner le disque rotatif de l'emplacement de distribution vers l'emplacement d'évacuation en face de l'emplacement du capteur de charge.

3. Appareil de dosage gravimétrique selon la revendication 2, caractérisé en outre en ce que le dispositif de distribution a une trémie (11) disposée au moins partiellement dans le boîtier cylindrique et ayant une goulotte (12) de distribution de la matière à la face supérieure du disque rotatif à l'emplacement de distribution lorsque le disque rotatif tourne.

4. Appareil de dosage gravimétrique selon la revendication 2, caractérisé en outre en ce que le dispositif destiné à extraire la matière du disque rotatif comprend un racloir (20) orienté verticalement et monté dans le boîtier et dépassant vers le bas à proximité de la surface supérieure du disque rotatif près de l'emplacement d'évacuation.

5. Appareil de dosage gravimétrique selon la revendication 4, caractérisé en outre en ce que le racloir (20) est supporté de manière verticalement élastique afin qu'il puisse flotter contre la surface supérieure du disque rotatif.

6. Appareil de dosage gravimétrique selon la revendication 2, caractérisé en outre en ce que le capteur (1) de charge est d'un type qui comprend un mince fléau dont une extrémité est montée à un emplacement fixe par rapport au boîtier et l'autre extrémité est fixée à la plate-forme horizontale élastique verticalement.

7. Appareil de dosage gravimétrique selon la revendication 2, caractérisé en outre en ce que le disque rotatif (14) a des nervures spiralées (141) à sa face inférieure, destinées à repousser légèrement la matière en vrac à la surface supérieure du disque rotatif de manière générale vers sa circonférence lorsque le disque tourne.

8. Appareil de dosage gravimétrique selon la revendication 2, caractérisé en outre par un disque flexible d'étanchéité (51) placé entre le fond horizontal (5) et le disque rotatif (14), et coopérant de façon étanche avec le boîtier cylindrique grâce à une bague de retenue (52) qui fixe la périphérie du disque d'étanchéité dans une gorge (61) de la paroi du boîtier cylindrique.

9. Appareil de dosage gravimétrique selon la revendication 8, caractérisé en outre en ce que le disque d'étanchéité a plusieurs nervures (56) à sa face supérieure près de l'emplacement d'évacuation, les nervures ayant une orientation générale radiale afin qu'elles facilitent la direction de la matière en vrac vers l'emplacement d'évacuation.

10. Appareil de dosage gravimétrique selon la revendication 2, caractérisé en outre en ce que le fond du boîtier (5) a un grand tronçon retiré au voisinage de l'emplacement d'évacuation et permet ainsi au disque rotatif flexible (14) de s'arrêter à cet emplacement pour déverser sa charge à l'emplacement d'évacuation.
